# EUROPEAN PATENT SPECIFICATION

(11) **EP 2 075 163 B1**
(45) Date of publication and mention of the grant of the patent: **15.10.2014**
(21) Application number: 08022406.6
(22) Date of filing: 23.12.2008
(51) Int. Cl.: B60R 19/26, B62D 27/04

(54) **Vehicle bumper**
Fahrzeugstoßfänger
Amortisseur de véhicule

(30) Priority: 27.12.2007 JP 2007336039
(43) Date of publication of application: 01.07.2009
(73) Proprietor: Yamaha Hatsudoki Kabushiki Kaisha, Iwata-shi, Shizuoka -ken 438-8501 (JP)
(72) Inventor: Sawai, Seiji c/o Yamaha Hatsudoki Kabushiki Kaisha, Iwata-shi Shizuoka-ken 438-8501 (JP)
(74) Representative: Grünecker, Kinkeldey, Stockmair & Schwanhäusser

(56) References cited:
- EP-A- 0 395 343
- EP-A- 1 671 872
- GB-A- 1 242 273
- KR-A- 20070 118 361
- US-A- 1 812 417
- US-A- 4 070 052
- US-A- 6 007 123
- US-A1- 2003 160 466

## Description

The present invention relates to a vehicle bumper according to the preamble of independent claim 1. Such a vehicle bumper can be taken from the prior art document US 2003/0160466 A1.

Conventionally, in a vehicle body frame of an automobile, a reinforce member as disclosed in US 5,411,311 may be attached, or so-called retrofit, and used in order to partially improve the rigidity in accordance with the running condition or preference of a driver. The reinforce member disclosed in US 5,411,311 is formed in an elongated shape and positioned in an engine compartment.

This reinforce member is attached on an upper end of a portion which is so-called a right or left pair of suspension towers of the vehicle body frame so as to connect the suspension towers to each other. This allows the reinforce member to reinforce the vehicle body with respect to force applied to the vehicle body in the vehicle width direction from an upper end of a shock absorber for a front wheel suspension device.

The above-described reinforce member is elastically deformed by compression when a load is applied in the vehicle width direction, and due to the immediate release of the load, the reinforce member generates the vibration, so that the riding comfort could be deteriorated. In order to prevent the generation of the vibration, a hydraulic damper or a vibration damping portion such as rubber may be provided on a halfway portion in the longitudinal direction as disclosed in JP-A-2002-211437.

JP-A-2002-211437 discloses a vehicle body vibration damper capable of damping the vibration of a vehicle body rather than reinforcing the vehicle body.

It is desirable that the above-described vehicle body vibration damper disclosed in JP-A-2002-211437 is attached to a vehicle body frame in a series of procedures in assembly of the vehicle body. However, the number of procedures in the assembly of the vehicle body is increased by the procedure of attaching the vehicle body vibration damper to the vehicle body frame, which could increase the production cost. The present invention is made to solve the above problems.

EP 1671872 A1 discloses a vehicle bumper according to the preamble of claim 1.

It is an objective of the present invention to provide a vehicle bumper as indicated above capable of damping vibrations occurring during operation of a vehicle efficiently.

According to the present invention, said objective is solved by a vehicle bumper having the features of independent claim 1.

Preferably, the vibration damping portion is integral with the bumper reinforcement.

Further, preferably the bumper reinforcement is made of metal material.

Still further, preferably the vibration damping portion is disposed within the bumper reinforcement.

According to a preferred embodiment, the bumper reinforcement has a substantially tubular shape.

Preferably, the vibration damping portion is attached above and/or below the bumper reinforcement.

Further, preferably mounting members are attached to the bumper reinforcement on a left and right side in the width direction, and the vibration damping portion is located between the opposite mounting members.

There is further provided a vehicle having a vehicle body frame with a front and/or a rear vehicle bumper according to one of the above embodiments.

Preferably, the front and/or the rear vehicle bumper is/are removably attached to the vehicle body frame.

In the following, the present invention is explained in greater detail by means of embodiments thereof in conjunction with the accompanying drawings, wherein:
- FIG. 1: is a front view showing a configuration of a vehicle body vibration damping apparatus according to a first embodiment;
- FIG. 2: is a cross sectional view showing a state that a bumper is attached to a vehicle body frame;
- FIG. 3: is a cross sectional view of a hydraulic damper;
- FIG. 4: is a perspective view of a bumper reinforcement to which the hydraulic damper is attached and a bumper mounting portion of the vehicle body frame;
- FIG. 5: is a cross sectional view showing another embodiment in which the hydraulic damper is attached below a lower plate of the bumper reinforcement;
- FIG. 6: is a front view showing another embodiment in which the hydraulic damper is attached below a bumper reinforcement body;
- FIG. 7: is a cross sectional view taken along the line VII-VII of FIG. 6;
- FIG. 8: is a cross sectional view showing a second embodiment in which the hydraulic damper is attached to a mounting member;

### Among others, the following reference signs are used in the figures:

- 2:: bumper
- 3:: hydraulic damper
- 4:: vehicle body frame
- 5:: bumper mounting portion
- 6:: side frame
- 11:: bumper reinforcement
- 12:: buffer member
- 13:: cover
- 14:: bumper reinforcement body
- 16:: mounting member
- 18:: upper plate
- 19:: lower plate
- 60:: fourth plate member

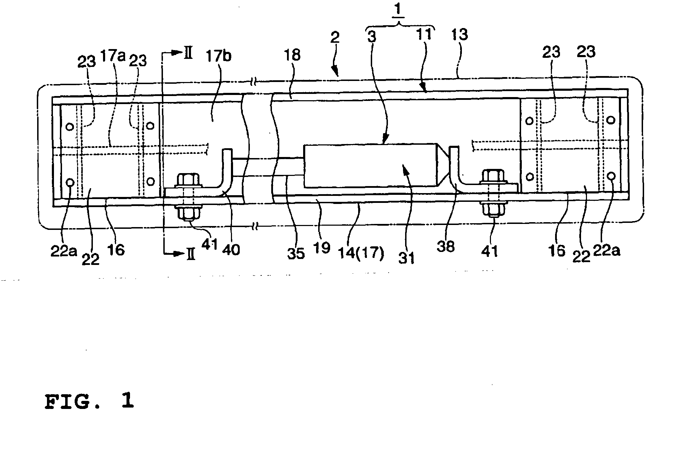

Hereinafter, a first embodiment of a vehicle body vibration damping apparatus will be explained with reference to FIGs. 1 through 4 in detail.

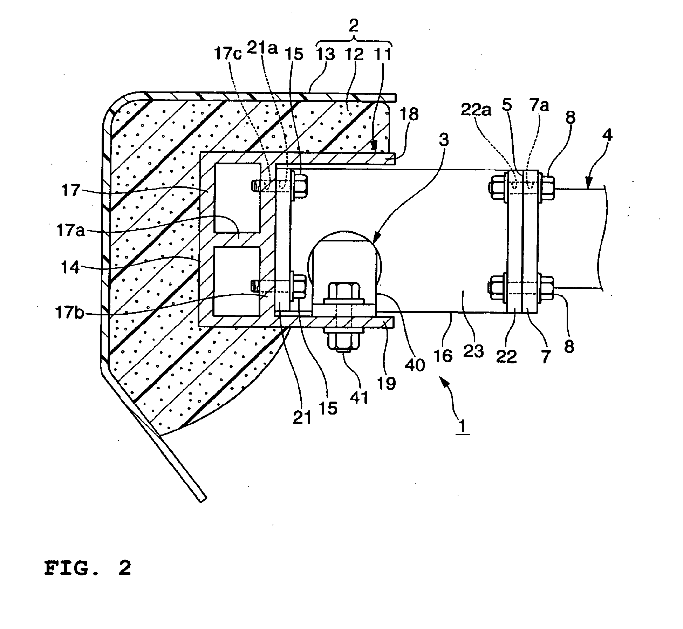

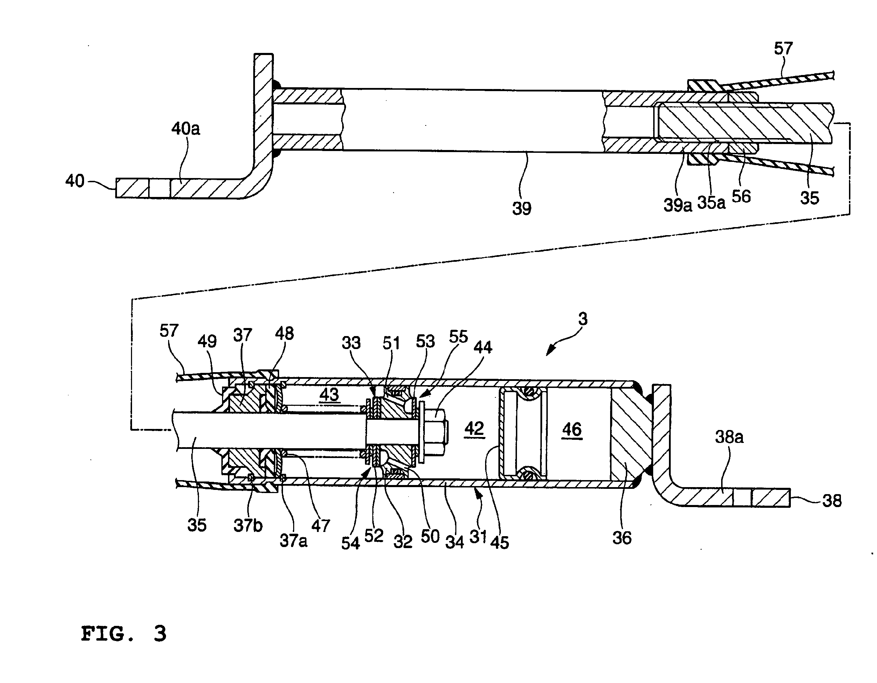

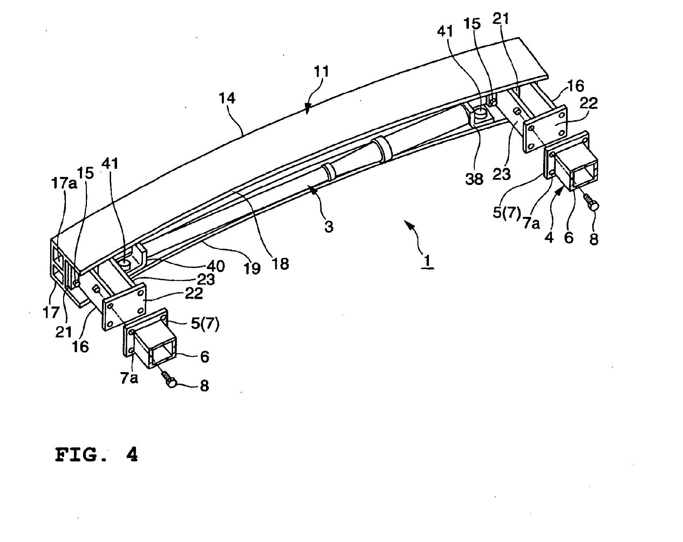

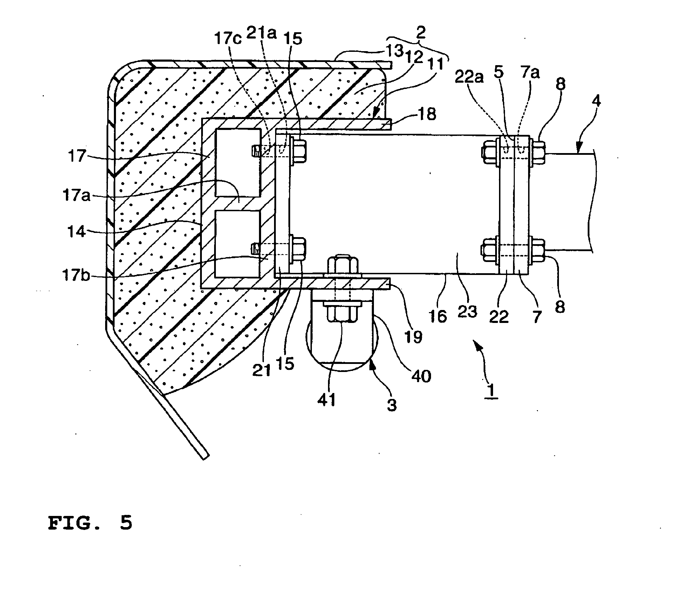

FIG. 1 is a front view showing a configuration of the vehicle body vibration damping apparatus. In FIG. 1, a bumper is depicted in a state that it is viewed from the side of a vehicle body frame. FIG. 2 is a cross sectional view in a state that the bumper is attached to a vehicle body frame, whose cut portion is shown as the line II-II in FIG. 1. FIG. 3 is a cross sectional view of a hydraulic damper, and FIG. 4 is a perspective view of a bumper reinforcement to which the hydraulic damper is attached and a bumper mounting portion of the vehicle body frame. In FIG. 4, the bumper mounting portion is illustrated in a state that it is separated from the vehicle body frame. FIG. 5 is a cross sectional view showing another embodiment in which the hydraulic damper is attached below a lower plate of the bumper reinforcement.

In these figures, the reference numeral 1 denotes a vehicle body vibration damping apparatus according to this embodiment. As shown in FIGs. 1 and 2, this vehicle body vibration damping apparatus 1 is constituted by attaching a hydraulic damper 3 serving as a vibration damping portion to a bumper reinforcement 11 constituting a part of a vehicle bumper 2. As shown in FIGs. 2 and 4, the vehicle body vibration damping apparatus 1 is removably attached to a bumper mounting portion 5 of a vehicle body frame 4.

The vehicle body frame 4 is of a so-called ladder type. As shown in FIG. 4, the vehicle body frame 4 is constituted by a right and left pair of side frames 6 and 6 and a plurality of cross members (not shown) connecting these side frames 6 and 6. Vehicle components such as a wheel suspension device and an engine are mounted on the vehicle body frame 4, although they are not shown. The bumper mounting portion 5 is provided on the distal end portion of the side frames 6 and 6 (an end portion on the front side or an end portion on the rear side of the vehicle body).

The bumper mounting portion 5 is formed by a rectangular plate member 7 provided at the end portion of the side frame 6 to extend vertically as well as in the vehicle width direction. A bolt hole 7a through which a bolt portion of a fixing bolt 8 for the bumper reinforcement is inserted is formed at a portion corresponding to four corners of the plate member 7.

As shown in FIG. 2, the bumper 2 is constituted by the bumper reinforcement 11 attached to the bumper mounting portion 5 by the fixing bolt 8, a buffer member 12 for covering the bumper reinforcement 11, and a cover 13 for covering the buffer member 12. As shown in FIGs. 2 and 4, the bumper reinforcement 11 is constituted by a bumper reinforcement body 14 extending in the vehicle width direction, and a right and left pair of mounting members 16 and 16 attached to both ends of the bumper reinforcement body 14 in the vehicle width direction by a fixing bolt 15.

As shown in FIG. 4, the bumper reinforcement body 14 in this embodiment is curved so as to be convexed in the opposite direction from the vehicle body frame 4 (in the forward direction of the vehicle body in the bumper reinforcement body 14 for a front bumper, or in the rearward direction of the vehicle body in the bumper reinforcement body 14 for a rear bumper).

The bumper reinforcement body 14 is constituted by a rectangular tube 17 extending longitudinally in the vehicle width direction, an upper plate 18 provided to extend on an upper end portion of the rectangular tube 17, and a lower plate 19 provided to extend on a lower end portion of the rectangular tube 17. The rectangular tube 17, the upper plate 18, and the lower plate 19 are integrally formed by a drawing process using an aluminum alloy material.

As shown in FIG. 2, a partition wall 17a for vertically dividing the inside of the rectangular tube 17 into two parts is provided in the rectangular tube 17. The partition wall 17a is formed to extend from one end to the other end of the rectangular tube 17. Each of the upper plate 18 and the lower plate 19 is formed by a flat plate extending from one end toward the other end of the rectangular tube 17. The upper plate 18 horizontally protrudes from the upper end portion of the rectangular tube 17 to the side of the vehicle body frame 4, and the lower plate 19 horizontally protrudes from the lower end portion of the rectangular tube 17 to the side of the vehicle body frame 4.

The mounting member 16 is formed in the specified shape by combining and welding a plurality of plate members made of aluminum alloy. As shown in FIGs. 2 and 4, the mounting member 16 in this embodiment is constituted by a first plate member 21 fixed by the fixing bolt 15 to a vertical wall 17b opposed to the bumper mounting portion 5 in the rectangular tube 17, a second plate member 22 fixed to the bumper mounting portion 5 by the fixing bolt 8, and two third plate members 23 connecting the first plate member 21 and the second plate member 22.

The first and second plate members 21 and 22 are constituted to extend vertically as well as in the vehicle width direction. The first plate member 21 is formed to a size that can be inserted between the upper plate 18 and the lower plate 19. The two third plate members 23 are constituted to extend vertically as well as in the forward and rearward direction and are welded in a parallel state to the first and second plate members 21 and 22. The third plate members 23 are also formed to a size that can be inserted between the upper plate 18 and the lower plate 19.

As shown in FIG. 2, the fixing bolt 15 for fixing the first plate member 21 to the rectangular tube 17 is inserted into a bolt hole 21 a formed in the first plate member 21 to be threaded into a female screw hole 17c formed on the vertical wall 17b of the rectangular tube 17.

As shown in FIG. 2, a bolt hole 22a for inserting a bolt portion of the fixing bolt 8 is formed at a portion corresponding to each bolt hole 7a of the bumper mounting portion 5 in the second plate member 22.

The buffer member 12 is made of foamed plastic etc. formed to a specified shape. The buffer member 12 is formed to cover the bumper reinforcement 11 from the front, upper side, and lower side, and is fixed to the bumper reinforcement 11 by bolt fastening, hook fastening, adhesion and the like.

The cover 13 is a plastic member constituting an outer appearance of the bumper 2 and covers an outer portion of the buffer member 12. In this embodiment, the cover 13 is fixed to the bumper reinforcement 11 by a bolt (not shown). Additionally, in a vehicle design in which an outer surface of the cover 13 is flush with a surface (an outer appearance surface) of an outer appearance member of the vehicle (for example, a body), the cover 13 may be fixed to the outer appearance member by a bolt.

As shown in FIGs. 1 and 4, the hydraulic damper 3 is formed of an elongated shape extending from one end to the other end of the bumper reinforcement 11 in the vehicle width direction, and generates a damping force with respect to elastic deformation of the bumper reinforcement 11 in the vehicle width direction. As shown in FIG. 3, the hydraulic damper 3 in this embodiment is constituted by a hydraulic cylinder 31 and a diaphragm 33 provided on a piston 32 of the hydraulic cylinder 31.

The hydraulic cylinder 31 is constituted by a cylinder tube 34, the piston 32, a piston rod 35, a plug member 36 for blocking an opposite end from the piston rod 35 in the cylinder tube 34, a rod guide 37 for blocking an end on the side of the piston rod 35 in the cylinder tube 34, a first mounting bracket 38 welded to the plug member 36, and a second mounting bracket 40 connected to a distal end of the piston rod 35 through an extension rod 39.

The hydraulic damper 3 is attached to the lower plate 19 of the bumper reinforcement 11 by the first and second mounting brackets 38 and 40. The first and second mounting brackets 38 and 40 are formed in an L-shape in a cross section including horizontal mounting portions 38a and 40a, and the first and second mounting brackets 38 and 40 are attached to the lower plate 19 by a mounting bolt 41 (see FIGs. 2 and 4) in a state that mounting portions 38a and 40a are laid on an upper surface of the lower plate 19. As shown in FIGs. 1 and 4, the first and second mounting brackets 38 and 40 are attached on the inner side in the vehicle width direction than the mounting portion 16 in the lower plate 19.

In the bumper reinforcement 11, a dead space enclosed from three directions by the bumper reinforcement body 14 and the right and left pair of mounting members 16 and 16 is formed. In this embodiment, as the hydraulic damper 3 is housed in the dead space, the interference between the hydraulic damper 3 and the other components is prevented in the assembly of the vehicle body vibration damping apparatus 1 to the vehicle body frame 4.

By attaching the hydraulic damper 3 to the bumper reinforcement 11 in this manner, both ends of the hydraulic damper 3 in the vehicle width direction are fixed to both ends of the bumper reinforcement 11, while the hydraulic damper 3 is housed in the bumper reinforcement 11.

The piston 32 is formed to have a circular cross section to be fitted in the cylinder tube 34. Moreover, the piston 32 defines a first oil chamber 42 and a second oil chamber 43 in the cylinder tube 34 and is fixed to the piston rod 35 penetrating through the axis by a fixing nut 44.

The first oil chamber 42 is formed between the piston 32 and a free piston 45 movably fitted in the cylinder tube 34. The free piston 45 defines the first oil chamber 42 and a high pressure gas chamber 46 in one end portion of the cylinder tube 34. The high pressure gas chamber 46 is constituted by the cylinder tube 34, the plug member 36, and the free piston 45. The high pressure N₂ gas is filled in the high pressure gas chamber 46.

The piston 32 is urged in the direction where the hydraulic cylinder 31 is compressed by a compression coil spring 47 elastically fitted between the piston 32 and the rod guide 37.

The rod guide 37 is fitted in the cylinder tube 34 and fixed by snap rings 37a and 37b.

Seal members 48 and 49 for sealing a portion through which the piston rod 35 penetrates are provided on both ends of the rod guide 37 in the axial direction.

The compression coil spring 47 serves to balance out gas reaction force applied to the piston 32 through hydraulic oil in the cylinder tube 34. This reaction force is generated since a pressure receiving area on the side of the second oil chamber 43 is smaller than that on the side of the first oil chamber 42 in the piston 32.

In other words, as the hydraulic oil in the first and second oil chambers 42 and 43 is pressurized by the high pressure N₂ gas, the piston 32 receives gas reaction force corresponding to the difference of the pressure receiving areas from the hydraulic oil, and is urged in the extending direction of the hydraulic cylinder 31 by this gas reaction force. In this embodiment, the free length of the hydraulic damper 3 is the length in a state that the gas reaction force is balanced out by elastic force of the pressure coil spring 47. In this hydraulic damper 3, the pressure of N₂ gas is adjusted so that the free length corresponds to the mounting dimension to the bumper reinforcement 11.

By allowing the free length to correspond to the mounting dimension to the bumper reinforcement 11 in this manner, the attachment of the hydraulic damper 3 to the bumper reinforcement 11 becomes easy. Moreover, without operating the pressure by the gas reaction force to the bumper reinforcement 11, almost only damping force can operate to the bumper reinforcement 11.

The diaphragm 33 provided on the piston 32 has the substantially same configuration as that used in a suspension shock absorber and the like, and is constituted by first and second check valves 54 and 55 provided with plate springs 52 and 53 for opening and closing an opening of one end of communication holes 50 and 51 formed in the piston 32. The plate springs 52 and 53 are formed to be annular and fixed to the piston 32 on their inner peripheral portions in a state that plural plate springs are stacked.

The first check valve 54 generates the damping force when the hydraulic oil flows against the elastic force of the plate spring 52 in one direction from the first oil chamber 42 to the second oil chamber 43. The second check valve 55 generates the damping force when the hydraulic oil flows against the elastic force of the plate spring 53 in one direction from the second oil chamber 43 to the first oil chamber 42.

The extension rod 39 interposed between the distal end of the piston rod 35 and the second mounting bracket 40 is formed by a pipe. One end of the extension rod 39 is screwed to the distal end of the piston rod 35.

Moreover, the other end of the extension rod 39 is welded to the second mounting bracket 40.

The connecting portion between the one end of the extension rod 39 and the piston rod 35 has a configuration in which a male screw 35a formed on the piston rod 35 is screwed to a female screw 39a of the extension rod 39 and a lock nut 56 tightens the connected portion. By adopting this mounting structure of the extension rod 39 by a screw, the free length of the hydraulic damper 3, which changes due to fluctuation of the N₂ gas pressure, can be finely adjusted. A rubber cover 57 covers an outer side of a portion between the one end of the extension rod 39 to which the piston rod 35 is screwed and an end on the side of the piston rod 35 of the cylinder tube 34.

The vehicle body vibration damping apparatus 1 configured as above is assembled by attaching the hydraulic damper 3 to the bumper reinforcement 11 by the mounting bolt 41.

This assembly of the vehicle body vibration damping apparatus 1 is performed at a different place from the assembly line of the vehicle body where various components are mounted to the vehicle body frame 4. Meanwhile, the attachment of the vehicle body vibration damping apparatus 1 to the vehicle body frame 4 is performed in the assembly line of the vehicle body.

To attach the vehicle body vibration damping apparatus 1 to the vehicle body frame 4, the second plate member 22 of the mounting member 16 is stacked on the plate member 7 of the bumper mounting portion 5, and both plate members 7 and 22 are fixed by the fixing bolt 8.

After the bumper reinforcement 11 is attached to the vehicle body frame 4 in this manner, the buffer member 12 and the cover 13 are assembled to the bumper reinforcement 11. By assembling the buffer member 12 and the cover 13 to the bumper reinforcement 11, the bumper 2 is completed.

In a vehicle having the vehicle body vibration damping apparatus 1 as configured above, force in the width direction is applied to the vehicle body frame 4 in accordance with the running condition in a turn, etc. At this time, the vehicle body frame 4 is elastically deformed in the vehicle width direction even though it is a slight deformation of several micrometers to several millimeters. Then, the bumper reinforcement body 14 is elastically deformed in the vehicle width direction similarly to the vehicle body frame 4 since it is connected to the vehicle body frame 4 through the mounting member 16. Since the bumper reinforcement body 14 is elastically deformed in the vehicle width direction in this manner, the hydraulic damper 3 is extended or contracted.

Then, the action is buffered due to a damping effect of the hydraulic damper 3, so that the vibration generated to the bumper reinforcement body 14 and the vehicle body frame 4 after the elastic deformation can be dampened.

The vehicle body vibration damping apparatus 1 according to this embodiment is constituted by preliminarily attaching the hydraulic damper 3 to the bumper reinforcement 11, so that the apparatus can be installed in the vehicle body frame 4 by attaching the bumper reinforcement 11 to the vehicle body frame 4.

That is, it is unnecessary to provide the procedure of solely attaching the vibration damper 3 to the vehicle body frame 4 in an assembly line of the vehicle body. Thus, the vehicle body vibration damping apparatus 1 according to this embodiment can be installed in the vehicle body frame 4 without increasing the number of procedures in the assembly of the vehicle body. Moreover, in any vehicle, the bumper reinforcement 11 is originally a long product which is fixed across the vehicle body frame 4 in the vehicle width direction and is a structure capable of easily securing a dead space along its longitudinal direction. Accordingly, by disposing the hydraulic damper in the dead space, the interference between the hydraulic damper 3 and the other components is prevented in the assembly of the vehicle body vibration damping apparatus 1 to the vehicle body frame 4. Consequently, there is no restriction regarding attaching positions and attaching methods etc. of the hydraulic damper and the other components as in the conventional apparatus.

The bumper reinforcement body 14 in this embodiment is curved so as to be convexed in the opposite direction from the vehicle body frame 4. Accordingly, when the vehicle body frame 4 is elastically deformed in the vehicle width direction as described above, the elastic deformation of the bumper reinforcement body 14 easily occurs so that the curvature of the curve is increased or decreased, in other words, the bumper reinforcement body 14 is capable of bending.

Accordingly, when the vehicle frame 4 is elastically deformed in the vehicle width direction, the bumper reinforcement body 14 may not prevent the deformation of the vehicle body frame 4 with an excessive force, so that the bumper reinforcement body 14 is elastically deformed in a similar manner. As a result, the displacement of the vehicle body frame 4 is efficiently transmitted to the vehicle body vibration damping apparatus 1, which improves the responsiveness when the vehicle body frame 4 is vibrated in the vehicle width direction and the vehicle body vibration damping apparatus 1 generates the damping force.

In this embodiment, an example in which the first plate member 21 of the mounting member 16 is attached to the bumper reinforcement body 14 by the fixing bolt 15 is shown. However, the first plate member 21 may be welded to the bumper reinforcement body 14.

In this embodiment, an example in which the hydraulic damper 3 is attached to an upper surface of the lower plate 19 so as to be positioned above the lower plate 19 is shown. However, the mounting position of the hydraulic damper 3 may be changed as shown in FIGs. 5 through 7.

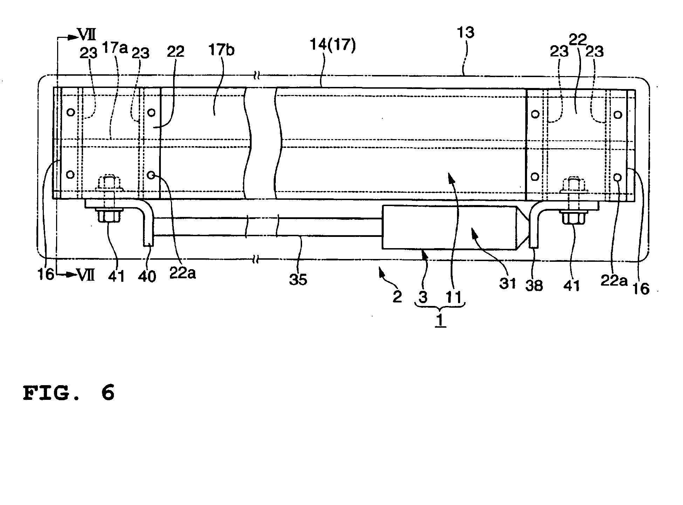

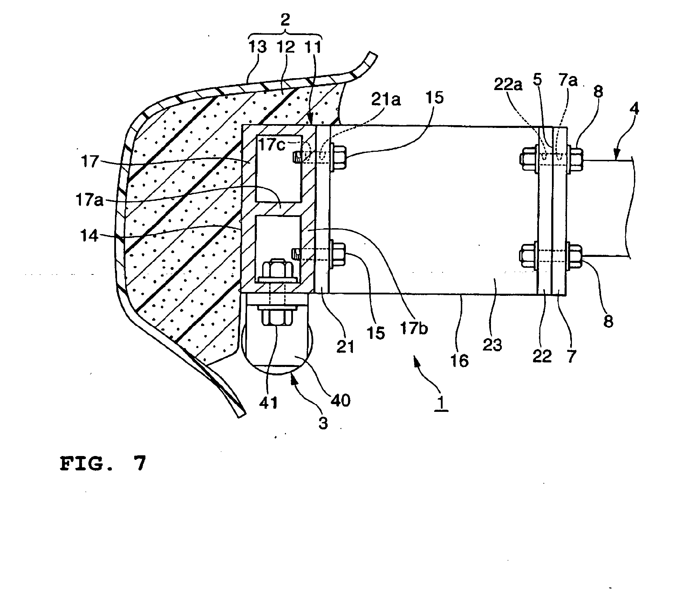

FIG. 5 is a cross sectional view showing another embodiment in which the hydraulic damper is attached below the lower plate of the bumper reinforcement. FIG. 6 is a front view showing another embodiment in which the hydraulic damper is attached below the rectangular tube of the bumper reinforcement body, and in this figure the bumper is illustrated in a state that it is viewed from the side of the vehicle body frame. FIG. 7 is a cross sectional view taken along the line VII-VII of FIG. 6. In these figures, the identical and similar parts as those explained in FIGs. 1 through 4 are denoted by the same reference numerals and the detailed explanation thereof is appropriately omitted.

The hydraulic damper 3 shown in FIG. 5 is attached to a lower surface of the lower plate 19 so as to be positioned below the lower plate 19 of the bumper reinforcement 11 shown in the first embodiment. Additionally, the hydraulic damper 3 may be attached below or above the upper plate 18 instead of above or below the lower plate 19.

In a case that the hydraulic damper 3 is attached below the lower plate 19 as shown in FIG. 5 or it is attached above or below the upper plate 18, the buffer member 12 is formed to cover the bumper reinforcement body 14 from the front, upper side, and lower side.

The bumper reinforcement body 14 shown in FIGs. 6 and 7 does not include the upper plate 18 and the lower plate 19 shown in the first embodiment, and is constituted by the rectangular tube 17 only. The hydraulic damper 3 shown in these figures is attached below the rectangular tube 17 so as to be positioned below the rectangular tube 17.

When the hydraulic damper 3 is attached to the rectangular tube 17 in the above manner, the hydraulic damper 3 may be attached above the rectangular tube 17 instead of below the rectangular tube 17.

When the hydraulic damper 3 is attached above or below the rectangular tube 17, the buffer member 12 is formed to cover the rectangular tube 17 from the front, and either of upper side or lower side on which the hydraulic damper is not positioned.

Even when the hydraulic damper 3 is attached below the lower plate 19, above the upper plate 18, below the upper plate 18, and either of below or above the rectangular tube 17, the same effect as in the embodiments shown in FIGs. 1 through 4 is achieved.

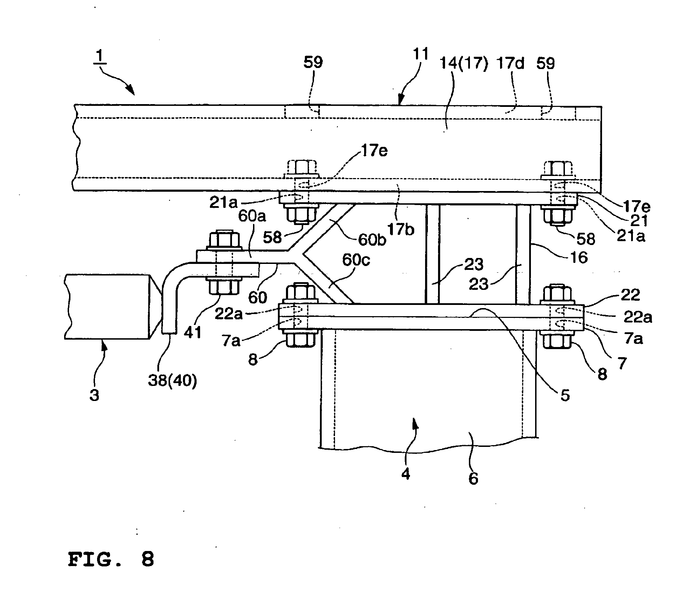

As shown in Fig. 8, the hydraulic damper 3 may be attached to the mounting member 16.

FIG. 8 is a cross sectional view showing a second embodiment in which the hydraulic damper is attached to the mounting member 16, and in this figure a connecting portion between the mounting member 16 positioned on one end in the vehicle width direction and the hydraulic damper 3 is shown. In the figure, the identical and similar parts as those explained in FIGs. 1 through 4 are denoted by the same reference numerals and the detailed explanation thereof is appropriately omitted.

The bumper reinforcement body 14 shown in FIG. 8 does not include the upper plate 18 and the lower plate 19 shown in the first embodiment, and is constituted by the rectangular tube 17 only. The mounting member 16 in this embodiment includes the first plate member 21, the second plate member 22, the two third plate members 23, a fourth plate member 60 formed in the shape of Y letter in a plain view and positioned on the inner side in the vehicle width direction than the third plate member 23. These members 21 through 23 and 60 are welded to each other. The first plate member 21 in this embodiment is attached to the vertical wall 17b of the rectangular tube 17 by a mounting bolt 58. The mounting bolt 58 is inserted into the rectangular tube 17 through a hole 59 formed in the other vertical wall 17d of the rectangular tube 17, and penetrates through a bolt hole 17e formed in the vertical wall 17b and the bolt hole 21a of the first plate member 21.

The fourth plate member 60 is constituted by a width direction extending portion 60a extending parallel to the vehicle width direction, and inclined potions 60b and 60c obliquely extending from an outer end of the width direction extending portion 60a in the vehicle width direction toward the first plate member 21 and the second plate member 22. The inclined portion 60b is welded to the first plate member 21, and the inclined portion 60c is welded to the second plate member 22.

The first and second mounting brackets 38 and 40 of the hydraulic damper 3 are attached to the width direction extending portion 60a by the mounting bolt 41.

In this embodiment, the hydraulic damper 3 is provided in a dead space between a pair of opposite mounting members 16 located on the left and right side in the vehicle width direction. By connecting the hydraulic damper 3 to the mounting member 16, the vibration of the vehicle body frame 4 in the vehicle width direction is directly transmitted to the hydraulic damper 3 from the mounting member 16 not through the bumper reinforcement body 14 (the rectangular tube 17).

Accordingly, in this embodiment, the vibration of the vehicle body frame 4 can be efficiently dampened with high responsiveness by the hydraulic damper 3.

Moreover, the configuration of the vehicle body frame 4 is not limited to a ladder type shown in the above embodiments, and any configuration is acceptable as long as it includes the right and left pair of bumper mounting portions 5. For example, the vehicle body frame 4 may have a monocoque structure.

Moreover, the cross section of the bumper reinforcement body 14 is not limited to the shape shown in the first to fourth embodiments. It may be a simple rectangle without any partition wall 17a, or it may include multiple partition walls 17a.

The description above discloses (among others) an embodiment of a vehicle body vibration damping apparatus comprising: a bumper reinforcement that extends in a vehicle width direction and is removably attached on an end of a vehicle body frame in the forward and rearward direction; and a vibration damping portion integrally disposed in the bumper reinforcement, wherein the vibration damping portion is constituted by a hydraulic damper that is formed to an elongated shape extending in the vehicle width direction and generates damping force with respect to elastic deformation of the bumper reinforcement in the vehicle width direction, and both ends of the hydraulic damper in the vehicle width direction are fixed to the bumper reinforcement.

Accordingly, as the vibration damping portion constituted by the hydraulic damper is provided on the bumper reinforcement, the vibration damping portion can be installed the vehicle body frame by attaching the bumper reinforcement to the vehicle body frame.

Consequently, it is unnecessary to provide the procedure of installing the vibration damping portion in the vehicle body frame in an assembly line of the vehicle body. Thus, it is possible to provide a vehicle body vibration damping apparatus that can be attached to the vehicle body frame without increasing the number of procedures in the assembly of the vehicle body.

There is also disclosed an embodiment of a vehicle body vibration damping apparatus comprising: a bumper reinforcement that extends in a vehicle width direction and is removably attached on an end of a vehicle body frame in the forward and rearward direction; and a vibration damping portion integrally disposed in the bumper reinforcement, wherein the bumper reinforcement is formed to a tubular shape made of a metal material.

In order to provide a vehicle body vibration damping apparatus that can be installed in a vehicle body frame without increasing the number of procedures in the assembly of the vehicle body, the following preferred embodiment is suggested.

A bumper reinforcement 11 that extends in a vehicle width direction and is removably attached to a vehicle body frame 4 is provided. A vibration damping portion integrally provided with the bumper reinforcement 11 is provided. The vibration damping portion is constituted by a hydraulic damper 3 that is formed to an elongated shape extending in the vehicle width direction and generates damping force with respect to elastic deformation of the bumper reinforcement 11 in the vehicle width direction. Moreover, both ends of the hydraulic damper 3 in the vehicle width direction are fixed to the bumper reinforcement 11.

## Claims

1. Vehicle bumper for attachment to a bumper mounting portion (5) of a vehicle body frame (4), the vehicle bumper comprising:
a bumper reinforcement (11) extending in a width direction of the vehicle bumper (2), **characterized in that**
the bumper reinforcement (11) is constituted by a bumper reinforcement body (14) extending in the width direction, and a right and left pair of mounting members (16) attached to both ends of the bumper reinforcement body (14) in the width direction by a first fixing bolt (15), respectively,
a vehicle body vibration damping apparatus (1) is constituted by attaching a hydraulic damper (3) serving as a vibration damping portion to the bumper reinforcement (11) by second fixing bolts (41),
the mounting member (16) is stacked on the bumper mounting portion (5) and fixed by a third fixing bolt (8), such that the vehicle body vibration damping apparatus (1) including the hydraulic damper (3) and the bumper reinforcement (11) is removably attachable to the bumper mounting portion (5) of the vehicle body frame (4), the hydraulic damper (3) is configured to generate damping force with respect to elastic deformation of the bumper reinforcement (11) in the width direction, the hydraulic damper (3) has a substantially elongated shape extending in the width direction and configured to generate damping force with respect to elastic deformation of the bumper reinforcement (11) in the width direction, and both ends of the hydraulic damper (3) are fixed to the bumper reinforcement (11).

2. Vehicle bumper according to claim 1, **characterized in that** the hydraulic damper (3) is integral with the bumper reinforcement (11).

3. Vehicle bumper according to claim 1 or 2, **characterized in that** the bumper reinforcement (11) is made of metal material.

4. Vehicle bumper according to one of claims 1 to 3, **characterized in that** the hydraulic damper (3) is disposed within the bumper reinforcement (11).

5. Vehicle bumper according to one of claims 1 to 4, **characterized in that** the bumper reinforcement body (14) has a substantially tubular shape.

6. Vehicle bumper according to one of claims 1 to 3, **characterized in that** the hydraulic damper (3) is attached above and/or below the bumper reinforcement (11).

7. Vehicle bumper according to one of claims 1 to 3, or 6, **characterized in that** the hydraulic damper (3) is located between the opposite mounting members (16).

8. Vehicle having a vehicle body frame (4) with a front and/or a rear vehicle bumper according to one of claims 1 to 7.

9. Vehicle according to claim 8, wherein the front and/or the rear vehicle bumper is/are removably attached to the vehicle body frame (4).

## Patentansprüche

1. Fahrzeug-Stoßfänger zur Befestigung an einem Stoßfänger-Montageabschnitt (5) für einen Fahrzeug-Aufbaurahmen (4), der Fahrzeug-Stoßfänger umfasst:
eine Stoßfänger-Verstärkung (11), die sich in eine Breitenrichtung des Fahrzeug-Stoßfängers (2) erstreckt, **dadurch gekennzeichnet, dass**
die Stoßfänger-Verstärkung (11) durch einen Stoßfänger-Verstärkungskörper (14) gebildet wird, der sich in die Breitenrichtung erstreckt, und ein rechtes und linkes Paar von Montageelementen (16), angebracht an beiden Enden des Stoßfänger-Verstärkungskörpers (14) in der Breitenrichtung, jeweils durch einen ersten Fixierungsbolzen (15),
eine Fahrzeugaufbau-Vibrations-Dämpfungsvorrichtung (1), die durch Anbringen eines Hydraulikdämpfers (3), der als Vibrationsdämpfungsabschnitt dient, an der Stoßfänger-Verstärkung (11) durch zweite Fixierungsbolzen (41), ist gebildet,
das Montageelement (16) auf dem Stoßfänger-Montageabschnitt (5) gestapelt ist, und durch einen dritten Fixierungsbolzen (8) fixiert, so dass die Fahrzeugaufbau-Vibrations-Dämpfungsvorrichtung (1), die den Hydraulikdämpfer (3) und die Stoßfänger-Verstärkung (11) beinhaltet, entfernbar an dem Stoßfänger-Montageabschnitt (5) des Fahrzeug-Aufbaurahmens (4) angebracht ist, der Hydraulikdämpfer (3) konfiguriert ist um eine Dämpfungskraft mit Bezug auf eine elastische Deformation der Stoßfänger-Verstärkung (11) in die Breitenrichtung zu erzeugen, der Hydraulikdämpfer (3) eine im Wesentlichen langgestreckte Form hat, die sich in die Breitenrichtung erstreckt und konfiguriert ist, um eine Dämpfungskraft mit Bezug auf die elastische Deformation der Stoßfänger-Verstärkung (11) in die Breitenrichtung zu erzeugen, und beide Enden des Hydraulikdämpfers (3) an der Stoßfänger-Verstärkung (11) fixiert sind.

2. Fahrzeug-Stoßfänger gemäß Anspruch 1, **dadurch gekennzeichnet, dass** der Hydraulikdämpfer (3) integral mit der Stoßfänger-Verstärkung (11) ist.

3. Fahrzeug-Stoßfänger gemäß Anspruch 1 oder 2, **dadurch gekennzeichnet, dass** die Stoßfänger-Verstärkung (11) aus Metall-Material gemacht ist.

4. Fahrzeug-Stoßfänger gemäß einem der Ansprüche 1 bis 3, **dadurch gekennzeichnet, dass** der Hydraulikdämpfer (3) innerhalb der Stoßfänger-Verstärkung (11) positioniert ist.

5. Fahrzeug-Stoßfänger gemäß einem der Ansprüche 1 bis 4, **dadurch gekennzeichnet, dass** der Fahrzeug-Stoßfänger-Verstärkungskörper (14) eine im Wesentlichen rohrförmige Form hat.

6. Fahrzeug-Stoßfänger gemäß einem der Ansprüche 1 bis 3, **dadurch gekennzeichnet, dass** der Hydraulikdämpfer (3) oberhalb und/oder unterhalb der Fahrzeug-Stoßfänger-Verstärkung (11) angebracht ist.

7. Fahrzeug-Stoßfänger gemäß einem der Ansprüche 1 bis 3 oder 6, **dadurch gekennzeichnet, dass** der Hydraulikdämpfer (3) zwischen dem gegenüberliegenden Montageelementen (16) angeordnet ist.

8. Fahrzeug mit einem Fahrzeug-Aufbaurahmen (4) mit einem vorderen und/oder hinteren Fahrzeug-Stoßfänger gemäß einem der Ansprüche 1 bis 7.

9. Fahrzeug gemäß Anspruch 8, wobei der vordere und/oder hintere Fahrzeug-Stoßfänger entfernbar an dem Fahrzeug-Aufbaurahmen 4 angebracht ist/sind.

## Revendications

1. Pare-choc de véhicule destiné à être fixé à une partie de montage de pare-choc (5) d'un châssis de corps de véhicule (4), le pare-choc de véhicule comprenant :
- un renfort de pare-choc (11) s'étendant dans une direction d'une largeur du pare-choc de véhicule (2),
- **caractérisé en ce que** :
- le renfort de pare-choc (11) est constitué par un corps de renfort de pare-choc (14) s'étendant dans la direction de la largeur et une paire droite et gauche d'éléments de montage (16) fixés aux deux extrémités du corps de renfort de pare-choc (14) dans la direction de la largeur par un premier boulon de fixation (15), respectivement ;
- un appareil amortisseur de vibration de corps de véhicule (1) est constitué en fixant un amortisseur hydraulique (3) servant de partie d'amortissement de vibration au renfort de pare-choc (11) par un deuxième boulon de fixation (41) ;
- l'élément de montage (16) est superposé sur la partie de montage de pare-choc (5) et fixée par un troisième boulon de fixation (8), de sorte que l'appareil amortisseur de vibration de corps de véhicule (1) incluant l'amortisseur hydraulique (3) et le renfort de pare-choc (11) soit susceptible d'être fixé de manière amovible à la partie de montage de pare-choc (5) du châssis de corps de véhicule (4), l'amortisseur hydraulique (3) est configuré pour générer une force d'amortissement par rapport à une déformation élastique du renfort de pare-choc (11) dans la direction de la largeur, l'amortisseur hydraulique (3) a une forme sensiblement allongée s'étendant dans la direction de la largeur et est configuré pour générer une force d'amortissement par rapport à une déformation élastique du renfort de pare-choc (11) dans la direction de la largeur et les deux extrémités de l'amortisseur hydraulique (3) sont fixées au renfort de pare-choc (11).

2. Pare-choc de véhicule selon la revendication 1, **caractérisé en ce que** l'amortisseur hydraulique (3) est intégral au renfort de pare-choc (11).

3. Pare-choc de véhicule selon les revendications 1 ou 2, **caractérisé en ce que** le renfort de pare-choc (11) est fait en un matériau métallique.

4. Pare-choc de véhicule selon l'une des revendications 1 à 3, **caractérisé en ce que** l'amortisseur hydraulique (3) est disposé à l'intérieur du renfort de pare-choc (11).

5. Pare-choc de véhicule selon l'une des revendications 1 à 4, **caractérisé en ce que** le corps de renfort de pare-choc (14) a une forme sensiblement tubulaire.

6. Pare-choc de véhicule selon l'une des revendications 1 à 3, **caractérisé en ce que** l'amortisseur hydraulique (3) est fixé au-dessus et/ou au-dessous du renfort de pare-choc (11).

7. Pare-choc de véhicule selon l'une des revendications 1 à 3, ou 6, **caractérisé en ce que** l'amortisseur hydraulique (3) est situé entre les éléments de montage (16) opposés.

8. Véhicule comportant un châssis de corps de véhicule (4) avec un pare-choc de véhicule avant et/ou arrière selon l'une des revendications 1 à 7.

9. Véhicule selon la revendication 8, dans lequel le pare-choc de véhicule avant et/ou arrière est/sont fixé(s) de manière amovible au châssis de corps de véhicule (4).
